Europäisches Patentamt

European Patent Office

Office européen des brevets

(19)

(11) Publication number: **0 044 101**
A2

(12) # EUROPEAN PATENT APPLICATION

(21) Application number: **81200694.8**

(22) Date of filing: **19.06.81**

(51) Int. Cl.³: **C 08 F 212/12**
**//(C08F212/12, 220/44)**

(30) Priority: **01.07.80 NL 8003798**

(43) Date of publication of application:
**20.01.82 Bulletin 82/3**

(84) Designated Contracting States:
**AT BE CH DE FR GB IT LI LU NL SE**

(71) Applicant: **STAMICARBON B.V.**
**Postbus 10**
**NL-6160 MC Geleen(NL)**

(72) Inventor: **Tijssen, Jan**
**Jos Klijnenlaan 395**
**NL-6164 AJ Geleen(NL)**

(72) Inventor: **van der Loos, Jozef Lambertus Maria**
**Rijksweg Zuid 146**
**NL-6134 AE Sittard(NL)**

(74) Representative: **Hatzmann, Marinus Jan et al,**
**OCTROOIBUREAU DSM P.O.Box 9**
**NL-6160 MA Geleen(NL)**

(54) **Copolymer of alpha-methylstyrene and acrylonitrile, and object prepared therefrom.**

(57) The invention relates to a new copolymer consisting of 20-40 % by weight of acrylonitrile and 60-80 % by weight of $\alpha$-methylstyrene, having improved flow distortion characteristics. The invention is characterized in that the flow index is 45 at most, the spiral flow length is 65 at least and the ratio between spiral flow length and flow index 3.0 or higher.

EP 0 044 101 A2

0044101

-1-

## COPOLYMER OF α-METHYLSTYRENE AND ACRYLONITRILE, AND OBJECT PREPARED THEREFROM

The invention relates to a new copolymer consisting of 20-40 % by weight of acrylonitrile and 60-80 % by weight of α-methylstyrene, as well as to objects made from this copolymer.

Such copolymers, which are related to the styreneacrylonitrile copolymers (SAN), have a substantially better heat resistance in respect of SAN. These copolymers can be used in, among other things, household articles and thermally heavily loaded parts of electric articles, such as washing machines, dish washers, hot water containers and the like. Most of the copolymers of α-methylstyrene and acrylonitrile are used, however, for the improvement of the heat resistance of graft copolymers of styrene and acrylonitrile on a rubber (ABS)-polymers.

The fact is that the heat resistance of conventional, general purpose ABS polymers is insufficient for a number of applications. This particularly concerns those applications that require, in addition to a good impact resistance and flexural strength, also a good heat resistance. Examples of such applications are found in the automobile industry and in domestic and electrical appliances.

Copolymers of α-methylstyrene and acrylonitrile are known from, among other things, the American patent specification 3,010, 936 and from the Italian patent specification 715,646. The copolymer of α-methylstyrene and acrylonitrile described in these patent specifications is used for improving the heat resistance of ABS. In addition, a continuous process for the preparation of a copolymer of α-methyl-styrene and acrylonitrile is described in the Netherlands patent application 7411344, laid open to public inspection.

In the commercial use of ABS polymers whose heat resistance has been improved in the manner described above, and of copolymers of α-methylstyrene and acrylonitrile as such, problems will arise, however. The fact is that the processability of these products leaves much to be desired. The flow behaviour in particular is so poor generally, that special measures must be taken (such as very intensive kneading) to make the copolymer or the mixture in which the copolymer has been incorporated reasonably processable.

Possibilities to realize an improvement of the flow behaviour of the copolymer, or of mixtures of the copolymer with, for instance, ABS, include the following:

1. lowering of the average molecular weight,

2. increase of the free monomer content,

3. mixing- in of a copolymer of styrene and acrylonitrile, or

4. the replacement of a substantial part, for instance 10 % or more, of α-methylstyrene by styrene, so that a terpolymer is obtained.

None of these alternatives, however, provides a solution if, while retaining the mechanical properties such as toughness, impact resistance, stiffness, the optimum heat resistance is to be maintained.

A lowering of the average molecular weight of the copolymer has an adverse effect on the flexural strength and the heat resistance of the material.

An increase of the free monomer content is in practice not realistic, because it will be at the expense of the heat resistance and the impact resistance. Moreover, a product with a high free monomer content is less desirable from environmental and health point of view.

The two possibilities mentioned last, the mixing-in of a copolymer of styrene and acrylonitrile, or the replacement of a substantial part of the α-methylstyrene by styrene, will also result in a reduction of the heat resistance. These solutions, therefore, provide no way-out if maximum heat resistance is required.

The purpose of the invention is, therefore, to provide a copolymer consisting of 20-40 % by weight of acrylonitrile and 60-80 % by weight of α-methylstyrene, which copolymer combines an optimum heat resistance with good processing characteristics and mechanical properties. The present invention is based on the surprising insight that the heat resistance of a copolymer of α-methylstyrene and acrylonitrile is in part determined by the flow index, a low flow index corresponding with a good heat resistance and vice versa, while the processing behaviour is related to the spiral flow length. An optimum combination of properties, that is heat resistance, mechanical properties, and processing behaviour in the copolymer is therefore obtained if the spiral flow length and the flow index are relatively wide apart.

The new copolymer according to the invention is characterized in that the spiral flow length of the copolymer is at least 65, the flow index of the copolymer is 45 at most, while the spiral flow length/flow index ratio is at least 3.0.

Preferably the spiral flow length of the copolymer is at least 70 cm.

Preferably the flow index is at least 12.5, because at lower values it will be virtually impossible to obtain the correct spiral flow length. More specifically, the upper limit for the flow index is 25.

Optimum results in respect of the heat resistance, processing behaviour and mechanical properties are obtained if the spiral flow length/flow index ratio is at least 3.5.

Flow index is understood to mean the quantity of polymer flowing out of a capillary of a diameter of 1 mm and a length of 2 mm at 230 °C and under a pressure of 30 bar, expressed in $10^{-9}$ $m^3$/s (see also British patent specification 1,500,525).

The spiral flow length is, in this connection, the distance in centimetres which a polymer melt with a temperature of 260 °C on entry of the mould covers, under an initial pressure of 742 bar, in a mould kept at 50 °C. This mould has ducts of a width of 20 mm and a thickness of 3 mm (flat-spiral length: H. Ebneth, K. Böhm, Plastverarbeiter, 191, 1968, pages 261-269).

Surprisingly it has been found that the copolymer according to the invention has an optimum combination of properties, in which the good heat resistance, combined with the processing behaviour, while retaining a good flexural strength, are remarkable in particular.

For practical uses it is highly desirable to combine a heat resistance (HDT, annealed) of at least 116 °C with a bending strength not lower than 115 to 120 $N/mm^2$ and a spiral flow length of at least 65, preferably at least 70.

The copolymer according to the invention can be made continuously or batchwise using the polymerization processes known for styrene (radical) polymerizations, (emulsion, suspension, mass and solution polymerization or combinations thereof).

In these polymerization processes a number of interventions do have to be effected in order to achieve that the desired spiral flow length, flow index and S/V be reached. The most simple manner to realize this is by emulsion and/or suspension polymerization. In these processes it will suffice, for instance, to adjust the consumption pattern of the chain length regulator by, among other things, variation of the stirring pattern, respectively the adjustment of the stirring speed, with a lower stirring speed resulting in an increase of the S/V. Of course, a minimum stirring speed is necessary to obtain and maintain a good dispersion.

This pattern can also be influenced by reducing the pH to a value lower than 11, or by reducing the concentration of the chain regulator in the beginning of the polymerization process, as well as the maintenance of an adjusted temperature profile.

In additon to these possibilities to reach the desired spiral flow length, flow index and S/V, the manner of monomer addition may be adjusted as well, or extra initiator may be added after commencement of the polymerization process. Besides, it is also possible to add the chain length regulator only after polymerization has been carried out for some time.

In addition combinations of two or more of these measures are possible as well.

A good possibility to obtain a copolymer with the desired spiral flow length, flow index and S/V value is formed by the combination of two polymerization processes, which may result in a molecular weight distribution with two peaks.

Preference is given to emulsion polymerization, because with this process, compared with, for instance, mass or solution polymerization, a copolymer complying with the stated conditions can be obtained in a relatively simple manner.

With the polymerization in aqueous emulsion, the usual auxiliary material required for this purpose must be applied, such as emulsifiers, lye, salts, soaps, compounds yielding free radicals and chain length regulators.

Suitable chain length regulators are organosulphur compounds, such as the much used mercaptans, as well as the dialkyl dixanthogens, diaryldisulphides, mercapto thiazoles, tetraalkylthiuram mono- and disulphides, etc., separately or mixed with each other, as well as hydroxyl compounds, such as terpinolenes. At the same time, the dimer of α-methylstyrene or an α-alkene with relatively long chains can be used.

The commercially most widely used chain length regulators are particularly the mercaptan compounds, and of these the hydrocarbyl mercaptans with 8-20 carbon atoms per molecule are now much used. More specifically preference is given to mercaptans with a tertiary alkyl group.

The quantity of chain length regulator may vary within wide limits, depending on the mixture chosen, the specific compound, polymerization temperature, emulsifier and other variables relating to the recipe.

A good result can be achieved by using 0.01-5 parts by weight, preferably 0.05-2 parts by weight (per 100 parts by weight of monomer) of organosulphur compound. Suitable organosulphur compounds comprise n-octyl mercaptan, n-dodecyl mercaptan, tertiary dodecyl mercaptan, tertiary nonyl mercaptan, tertiary hexadecyl mercaptan, tertiary octadecyl mercaptan, tertiary eicosyl mercaptan, secondary octyl mercaptan, secondary tridecyl mercaptan, cyclododecyl mercaptan, cyclododecadienyl mercaptan, aryl mercaptan, such as 1-naphthalene thiol, etc.; bis(tetrahydrofuralxanthogen), diphenyldisulphide, tetramethylthiuram disulphide, 2-mercaptobenzathiazole and the like. Mixtures of these compounds can also be used.

As emulsifier, widely different compounds can be used, such as disproportionated rosin soap, fatty acid soap, mixtures of these compounds, aryl sulphonates, alkylaryl sulphonates and other surface-active compounds and mixtures thereof. Non-ionogenic emulsifiers, such as polyethers and polyols, can also be used. The quantities of emulsifiers used depend on the type of emulsifier, as well as on the reaction parameters and the concentrations of polymerizable monomers in the emulsion polymerization system.

Suitable compounds yielding free radicals are, for the emulsion polymerization process, organic or inorganic peroxides, hydroperoxides, azo compounds, as well as redox initiator systems. These compounds can be added at the beginning of the polymerization process. It is also possible to add these compounds partly at the beginning and partly in the course of the polymerization process.

Preferably alkali or ammonium persalts and/or redox systems are chosen as initiators. Particularly potassium persulphate, ammonium persulphate and sodium persulphate can be mentioned. Examples of suitable redox systems are persalts (for instance perchlorates or persulphates), tertiary butyl hydroperoxide, cumene hydroproxide, diisopropylbenzenehydroperoxide and methylcyclohexylhydroperoxide, combined with reductants based on acids containing sulphur in a low valence state, such as sodiumformaldehydesulphoxylate, bisulphide, pyrosulphide, or with organic bases, such as triethanolamine, with dextrose, sodium pyrophosphate and mercaptans or combinations thereof, optionally in combination with metal salts, such as ferrous sulphate. These initiators or initiator systems can be added in one or more steps or even gradually.

If the polymerization is carried out in solution, aromatic hydrocarbons can be used as solvents and organic peroxides or azo compounds as activators. In those cases in which, in this process, the polymerization is carried out only until a certain degree of conversion has been reached, the non-converted monomers and the solvent can be removed from the solid polymer, for instance by evaporation in a conveyor screw or in a falling film evaporator.

In those cases in which α-methylstyrene-acrylonitrile copolymers are prepared by means of suspension polymerization, it is possible to apply the usual suspension stabilizers, for instance polyvinyl alcohol or partially hydrolyzed polyvinyl acetate or hardly soluble metal phosphate compounds.

If desired, the copolymer may also contain minor quantities of one or more other monomers. These quantities must be smaller than 4 % by weight in respect of the copolymer, more specifically smaller than 2 % by weight.

An important application of the copolymer is in the addition to ABS, wholly or partly instead of SAN, to improve the heat resistance.

For certain uses it may be an advantage to use a mixture of different types of copolymer of α-methylstyrene and acrylonitrile.

Generally, the copolymer, if used as such, or the mixture of copolymer with another plastic, may contain the usual additives, such as antioxidants, dyes, processing aids, fillers, antistatics, flame retardants and the like.

The invention will now be elucidated by means of a few examples but is not restricted thereto.

Examples I up to and including V and comparative examples VI up to and including IX

The polymerization conditions of examples I up to and including V have been chosen so that the product obtained complies with the desired flow index, spiral flow length and S/V value. All percentages mentioned relate to the weight.

Example I

In this example the desired copolymer was obtained by adding the chain length regulator not until about 45 minutes after commencement of the polymerization.

The polymerization was carried out in a 100 l reactor provided with a high-speed stirrer (tip speed 5.1 m/s). The reactor was filled, under nitrogen, with 56 l of oxygen-free de-ionized water, in which 45 g of KOH and 485 g of rosin soap were dissolved. Subsequently, 7.77 kg of acrylonitrile and 16.51 kg of α-methylstyrene were dosed to it. While being stirred, the reaction mixture was heated to 50 °C, upon which 152 g of potassium persulphate (KPS) dissolved in 5 l of de-ionized oxygen-free water was added. The temperature was kept constant at 50 °C for 30 minutes, upon which the polymerization temperature was subsequently gradually increased in 90 minutes to a temperature of between 85° and 95 °C.

45 minutes after commencement of the polymerization process 228 g of tert. dodecyl mercaptan (TDDM) was dosed in a period of 30 min. 105 minutes after the raising of the temperature, again 152 g of KPS dissolved in 5 l of water was added to the reaction medium. Subsequently the temperature was kept constant for 30 minutes more, upon which the reaction mixture was cooled down to 60 °C in 60 minutes and was discharged.

The polymer latex thus obtained was coagulated with $H_2SO_4$ at high temperature, approx. 90 to 95 °C. The powder obtained was separated off, washed and dried. 23.4 kg of polymer with a moisture content of < 2 % and a free monomer content of < 0.7 % was obtained.

Of this powder a spiral flow and a flow index were measured according to the method described. The spiral flow length and the flow index thereof proved to be respectively 75 and 16, with which an S/V of 4.7 was reached. This product was found to have, in addition to this good flow index, a high HDT [(tempered at 105 °C) determined according to ASTM D-648 with a load of 1820 kPa (18.5 bar)] of 117 °C. The flexural strength determined according to ASTM D-790 was 131 N/mm$^2$.

Example II

This example is analogous to example I, but instead of a quick-acting stirring device a slowly rotating stirrer was used with a tip speed of 1.1 m/s, and the quantity of TDDM applied was added completely already in the beginning of the polymerization process. Moreover, instead of 45 g of KOH, 23 g of KOH was added, so that the pH was kept at a value between 10.5 and 11.

This product, too, which had a correct value for the spiral flow length, the flow index and the ratio thereof, was found to combine a good processability and high HDT, while retaining its flexural strength (see table).

Example III

This example was analogous to example II. However, a varying stirring speed was applied. In the beginning of the polymerization process till about 60 min. after the first dosing of potassium persulphate stirring was effected with a tip speed of 1.0 m/s, upon which the stirring speed was increased to 3.2 m/s. In this process there was less danger of undesired coagulation than in example II. Results see table.

Example IV

This example was carried out in the same way as example I, but with the distinction that, in the beginning of the polymerization process, 50 % of the soap and the water, 25 % of the monomers and the initiator and 10 % of the TDDM were supplied. The rest of the monomers, TDDM, initiator, soap and water were added to the reactor as an emulsion 60 minutes after commencement of the polymerization process during a period of 60 minutes.

For results see table.

Example V

The polymerization was carried out in a reactor with an effective capacity of about 28 m$^3$. To the reactor 15.3 m$^3$ of de-ionized water of 50 °C with 129.2 kg of emulsifier and 9.1 kg of KOH dissolved therein was added. Subsequently, 52 kg of tert. dodecyl mercaptan, 2564 l of acrylonitrile and 4827 l of α-methylstyrene were added hereto. After the reaction mixture had been brought to a temperature of 50 °C, 51.7 kg of potassium persulphate dissolved in 2.2 $m^3$ of water was added hereto. The reaction mixture was stirred during this addition with a tip speed of 1.9 m/sec., which is rather low for such a reactor. The temperature was brought to 90 °C in 2.5 hours. 15 minutes after the maximum temperature had been reached, again 51.7 kg op potassium persulphate dissolved in 2.2 $m^3$ of water was added to the reactor. Subsequently, the temperature was gradually lowered, in about two hours, to 60 °C, upon which the polymer latex obtained was passed to a coagulation vessel. The coagulation was carried out at about 93 °C with $H_2SO_4$. The powder obtained was separated out by centrifuge, washed out and dried to a moisture content of < 1 %. 6,380 kg of polymer with a free monomer content of 0.4 % of α-methylstyrene and 0.02 % of acrylonitrile was obtained.

For the properties of this product see table.


Example VI

In this example all ingredients, except the initiator, were pre-emulsified in the reactor at a high stirring rate before starting the reaction.

In a 10 l reactor 5700 g of oxygen-free de-ionized water, 1700 g of α-methylstyrene, 800 g of acrylonitrile, 13 g of dodecyl mercaptan, 50 g of rosin soap and 5.0 g of KOH were successively added under nitrogen. This reaction mixture was heated to 50 °C, in which process stirring was such that the reaction mixture was converted to a stable emulsion. Subsequently, 20 g of potassium persulphate was added to the reaction medium, upon which the temperature is gradually increased, in 120 min., to 85 °C. 15 minutes after this temperature has been reached 20 g of KPS is added once again. The temperature was kept constant for one hour more. Subsequently the latex obtained was coagulated with $H_2SO_4$ at about 95 °C. The powder obtained was separated off, washed and dried to constant weight. The results are included in the table.

## Examples VII, VIII and IX

Examples VII, VIII and IX are similar to respectively, example 1b of Dutch patent application 7411344 laid open to public inspection, example 2a of American patent no. 3,010,936 and example I of Italian patent No. 715646.

| | examples according to invention | | | | | examples not according to invention | | | |
|---|---|---|---|---|---|---|---|---|---|
| | I | II | III | IV | V | VI | VII | VIII | IX |
| flow index | 16 | 21 | 15 | 15 | 14 | 17 | 30 | 56 | - |
| spiral flow length | 75 | 82 | 71 | 76 | 75 | 49 | 78 | - | 35 |
| S/V | 4.7 | 3.9 | 4.7 | 5.1 | 5.4 | 2.9 | 2.6 | - | - |
| HDT °C[1] | 117 | 116 | 118 | 117 | 118 | 116 | 117 | 117 | 106[3] |
| flexural str. N/mm² [2] | 131 | 122 | 135 | 140 | 140 | 76 | 109 | 58 | 153 |

[1] tempered, according to ASTM D-648.

[2] ASTM D-790.

[3] Product contained approx. 2 w.-% of free monomers. After removal of part of these monomers a value of 116 was obtained.

From these examples it clearly follows that the products according to the invention combine a good heat resistance with a good processability and a good bending strength.

# C L A I M S

1. New copolymer consisting of 20-40 % by weight of acrylonitrile and 60-80 % by weight of $\alpha$-methylstyrene, characterized in that the flow index is 45 at most, the spiral flow length is 65 at least and the ratio between spiral flow length and flow index 3.0 or higher.

2. Copolymer according to claim 1, characterized in that the ratio between spiral flow length and flow index is at least 3.5.

3. Copolymer according to claim 1 or 2, characterized in that the copolymer has been prepared in emulsion.

4. Copolymer according to any one of the claims 1-3, characterized in that the copolymer contains a maximum of 4 % by weight of one or more other monomers.

5. Copolymer according to any one of the claims 1-4, characterized in that the flow index is at least 12.5.

6. Copolymer according to any one of the claims 1-5, characterized in that the spiral flow length is at least 70.

7. Copolymer according to claim 1, substantially as described and elucidated by means of the examples I-V.

8. Object wholly or partly made from the copolymer according to claims 1-7.

3207

C L A I M S

1. Process for the preparation of a new copolymer consisting of 20-40 % by weight of acrylonitrile and 60-80 % by weight of α-methylstyrene, characterized in that a polymer is prepared having a flow index of 45 at most, a spiral flow length is 65 at least and the ratio between spiral flow length and flow index 3.0 or higher.

2. Process according to claim 1, characterized in that the ratio between spiral flow length and flow index is at least 3.5.

3. Process according to claim 1 or 2, characterized in that the copolymer is prepared in emulsion.

4. Process according to any one of the claims 1-3, characterized in that the copolymer contains a maximum of 4 % by weight of one or more other monomers.

5. Process according to any one of the claims 1-4, characterized in that the flow index is at least 12.5.

6. Process according to any one of the claims 1-5, characterized in that the spiral flow length is at least 70.

7. Process according to claim 1, substantially as described and elucidated by means of the examples I-V.

8. Object wholly or partly made from the copolymer prepared according to claims 1-7.